Europäisches Patentamt

(19) European Patent Office

Office européen des brevets

(11) Publication number: **0 185 819
B1**

(12) **EUROPEAN PATENT SPECIFICATION**

(45) Date of publication of patent specification: **04.10.89**

(21) Application number: **84309101.8**

(22) Date of filing: **27.12.84**

(51) Int. Cl.⁴: **B 60 R 25/02**

(54) **Steering lock arrangement.**

(43) Date of publication of application:
02.07.86 Bulletin 86/27

(45) Publication of the grant of the patent:
04.10.89 Bulletin 89/40

(84) Designated Contracting States:
**DE FR GB**

(56) References cited:
EP-A-0 121 165
DE-A-2 916 559

PATENT ABSTRACTS OF JAPAN, vol. 8, no. 100
(M-295) 1537r, 11th May 1984; & JP - A - 59 14
551 (KOKUSAN KINZOKU KOGYO K.K.)
25.01.1984

(73) Proprietor: **KOKUSAN KINZOKU KOGYO CO.
LTD.**
8-2, Kamata 2-chome
Ota-ku Tokyo (JP)

(72) Inventor: **Sata, Hidekazu**
1004, Nakasone Minami Oaza
Kasukabe-shi Saitama-ken (JP)
Inventor: **Masaki, Mikio**
5-14-12, Ikegami Ohta-ku
Tokyo (JP)
Inventor: **Sakuno, Hideaki**
2-12-1-616, Minami-Ohi
Shinagawa-ku Tokyo (JP)
Inventor: **Nara, Etuo**
3-17-7, Omorinaka
Ohta-ku Tokyo (JP)

(74) Representative: **Barker, Rosemary Anne et al
Barlow, Gillett & Percival 94 Market Street
Manchester M1 1PJ (GB)**

Courier Press, Leamington Spa, England.

## Description

This invention relates to a steering lock arrangement, particularly but not exclusively for use in automobiles.

Recently, certain vehicles have been fitted with keyless steering lock arrangements whereby the vehicle driver pushes a certain number of button switches in a predetermined order to automatically unlock the vehicle steering shaft and start the engine. This means that the driver no longer needs to carry any mechanical keys to make use of his vehicle yet the vehicle is still reasonably secure against theft.

A keyless steering lock arrangement comprising an operating bar which is engagable with the steering shaft and is movable between shaft-locking and shaft-unlocking positions by cam means on a rotator which, in turn, is driven by an electric motor is disclosed in DE—A—2916559. Similar arrangements, without rotator, are referred to in EP—A—0121165 and the applicants' earlier case JP—A—59-14551.

An object of the present invention is to provide an improved arrangement of this type including circuit means which will monitor the operation thereof and indicate malfunction.

In accordance with the invention the motor is actuated by electronic circuit means which includes means to generate an alarm signal whenever the motor has been actuated to unlock the shaft but the bar has remained stuck in its shaft-locking position. The alarm generation means preferably includes a counter circuit and sensors which determine the actual position of the operating bar, the counter circuit being cleared upon confirmation of shaft-unlocking from the sensors, but alternatively, in the absence of such confirmation, acting to initiate the alarm signal upon lapse of a pre-determined time period.

The cam means is advantageously in the form of a sector cam having a slightly rounded apex for effecting shaft-locking of the bar and an arc-shaped cam-surface for effecting shaft-unlocking of the bar.

The invention will be described further, by way of example, with reference to the accompanying drawings, in which:

Fig. 1 is a vertical section of a steering shaft lock unit (without electronic circuit co-operating therewith) of a preferred embodiment of the arrangement of the invention;

Fig. 2 is a top plan view of the lock unit shown in Fig. 1 but with the housing lid removed;

Fig. 3 is a substantially vertical section, to an enlarged scale, of part of the lock unit shown in Fig. 1 illustrating the bearing section rotatably supporting the steering shaft, the latter being only partially shown;

Fig. 4 is a sectional view along the line A—A' shown in Fig. 2;

Fig. 5 is an end view of the rotator of the lock unit shown in Fig. 1;

Fig. 6, consisting of two parts, Fig. 6(A) and Fig. 6(B) separated from each other by a section line X—X', in a general electronic circuit arrangement adapted for control of the steering lock unit shown in Figs. 1 to 5 and the engine ignition circuit of a vehicle;

Fig. 7 is an enlarged circuit diagram of the counter in the circuit illustrated in Fig. 6; and

Fig. 8 is a timing chart illustrating the operation of the counter shown in Fig. 7.

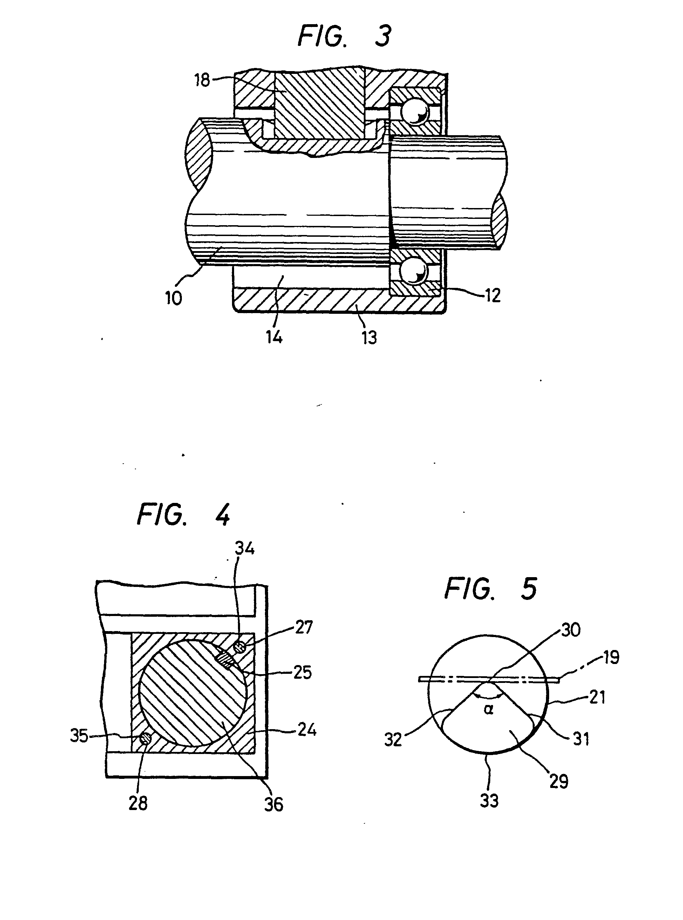

In a preferred embodiment of the steering lock arrangement of the invention as illustrated in the accompanying drawings, a conventional steering shaft 10 is rotatably supported by a ball bearing unit 12 (Fig. 3) which is positively supporting in a housing 13. This housing 13 is formed with a hollow cylindrical portion 14 in which the bearing unit 12 is positively mounted, for example by a pressure fit.

In the upper part of the housing 13, there is a guide opening 17 which communicates with the hollow cylindrical space 14 and with container chambers 15. The upper part of the housing 13 is closed by a pressure-fit or push-on lid 16 which assists theft-prevention.

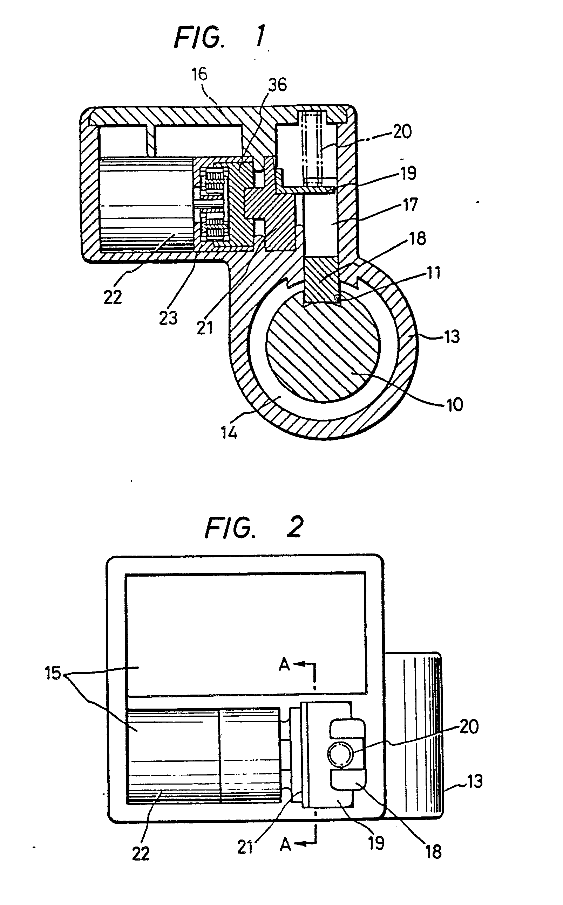

A locking bar 18 is slidably mounted in the guide opening 17, the bar 18 being shown in Fig. 1 in its advanced locking position in engagement with a reception recess 11 formed on the steering shaft 10. The locking bar 18 is accompanied by a so-called "hanger" 19 which slides in unison with the bar 18.

A coil spring 20 is mounted between the lid 16 and the hanger 19 under compression and thus urges the bar 18 to move downwards as shown in Fig. 1.

A member 21, called a "rotator", which is kept in pressure contact with the hanger 19, acts to prevent excess forward movement of the bar 18, as will later be described more fully.

An electric motor 22 and a gearing unit 23 are mounted in the frame 13 as shown in Fig. 1. Rotary movement is transmitted from the motor 22 through the gearing unit 23 to an output shaft 36. The gearing unit 23 is housed in a casing 24 the cross-section of which is shown in more detail in Fig. 4.

In the casing 24, two diametrically opposed openings 27 and 28 are provided for housing respective contactless reed switches 34 and 35. The former switch 34 is adapted for sensing the shaft-unlocked position, while the latter switch 35 senses the shaft-locked position.

When the motor 22 is energized, output torque is transmitted therefrom through the reduction gearing 23, the output shaft 36, a mechanical coupling provided between the latter and the rotator 21 and the hanger 19 to the locker bar 18, so as to raise the latter from its locking position shown in Fig. 1 towards its unlocking position.

As shown in Fig. 5, the rotator 21 is formed with a sector cam 29, having a cam angle alpha of 15 to 150 degrees, preferably about 90 degrees, between the respective side slopes 31 and 32. In the shaft-locking position, the hanger 19 is kept in pressure contact with the rounded cam tip 30 as shown in Fig. 5, under the action of compression spring 20 (Fig. 1). The rotator 21 is, of course, mechanically connected through the output shaft 36 and the gearing unit 23 to the motor 22.

The gears of the gearing unit 23 are preferably of profile-shifted type so as to transmit the largest possible torque whilst still allowing the whole unit to be highly compact.

As mentioned, in the gear case 24 of the gearing unit 23 there are a pair of diametrically opposed openings 27, 28 in which the respective reed switches 34, 35 are mounted. The former reed switch 34 is actuated by close proximity to or access co-operation with a magnet 25 embedded in output shaft 36 when the locking bar 18 is raised from its shaft locking position, by rotation of the motor 22 (through the gearing 23 and the hanger 19), to its unlocking position. In this way, the unlocking position of the bar 18 can be sensed.

Conversely, the opposite lead switch 35 is actuated when the motor 22 is rotated so that the bar 18 moves to its locking position, by close proximity or access co-operation with the magnet 23. In this way, the locking position of the bar 18 can be sensed.

It will be appreciated by any person skilled in the art that the said lead switches may, in appropriate circumstances, be replaced by microswitches or like means.

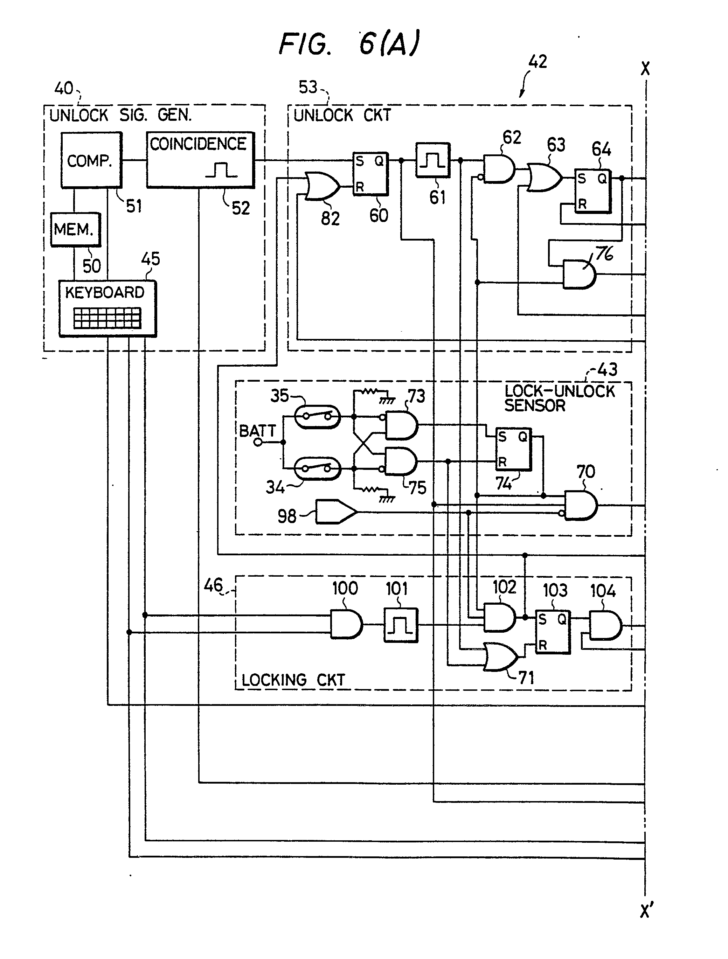

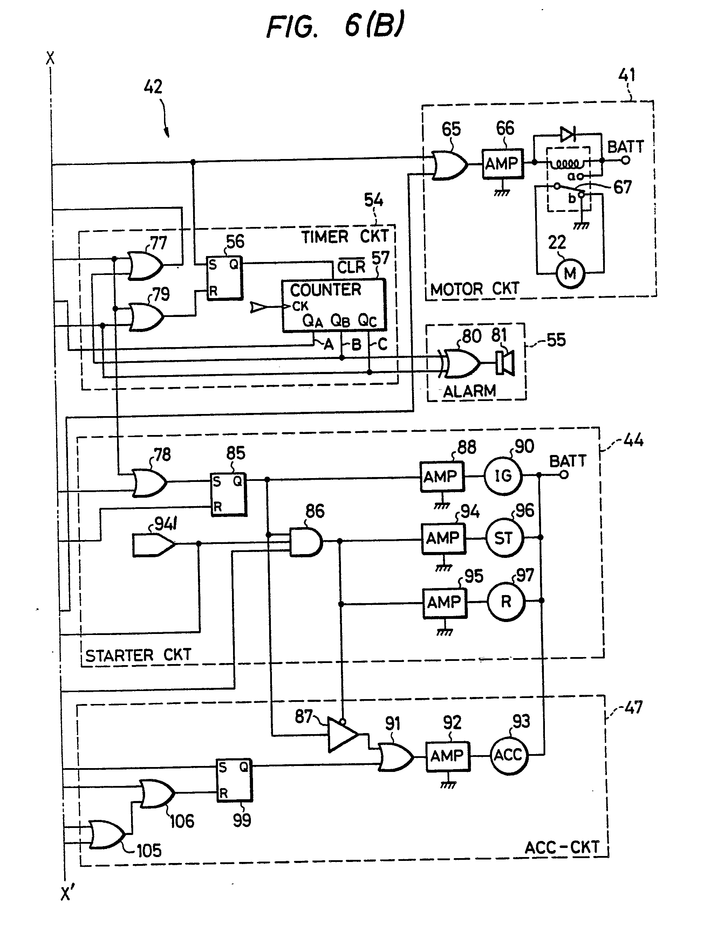

The motor 22 is controlled by a keyless steering lock control circuit which is generally shown in Fig. 6 and has a plurality of button switches arranged in a matrix on a keyboard 45.

Within this overall control circuit, there are an unlock signal generating circuit 40, a motor circuit 41, a bar stick-prevention circuit 42, a lock-and-unlock sensor circuit 43, an engine starter circuit 44, a shaft-locking circuit 46, and an ACC-control circuit 47.

The bar stick-prevention circuit 42 comprises an unlocking circuit 53, a timer circuit 54 and an alarm circuit 55.

Outputs of the button switches of the matrix keyboard 45 are connected to a comparator circuit 51 and several gates as shown. When selected button switches of the keyboard 45 are depressed a series of signals representing an intended number are sent to the comparator 51 and comparison is made between that number and a number stored in the comparator memory 50. When coincidence occurs therebetween, a coincidence signal is delivered from the comparator 51 to a coincidence signal output circuit 52 causing an unlock instruction signal to be delivered therefrom.

This instruction signal is fed to a setting terminal S of an RS-flip-flop 60 which is thus brought into set position. The latched signal is delivered from the RS-flip-flop 60 through its Q-terminal to a one-shot output circuit 61 and an AND-gate 70, respectively. The circuit 61 delivers its one-shot output to an AND-gate 62 and an OR-gate 71, respectively. The other input terminal of the AND-gate 62 is adapted for receiving L-signal from a Q-terminal of an RS-flip-flop 74 which is reset by the output of an AND-gate 75 connected to outputs from both the closable reed switch 35 and the operable reed switch 34 when the locking bar 18 is situated at its locking position. Thus, the output from the RS-flip-flop 60, when the bar 18 is in its shaft-locking position, is shaped in the one-shot output circuit 61 and delivered through both the AND-gate 62 and an OR-gate 63 to the set-terminal of an RS-flip-flop 64. The latter will deliver output from its Q-terminal through an OR-gate 65 to an amplifier 66 so as to activate a relay 67 at its "A"-terminal and energize the drive motor 22.

Actuation of the motor 22 causes the bar 18 to be lifted up to its unlocking position. At the same time, the reed switch 34 is switched on under the influence of the magnet 25, while the other reed switch 35 is turned off. Thus, the AND-gate 73 will deliver output for setting the RS-flip-flop 74. Output will be delivered from the Q-terminal of the latter to the reserving terminal of an AND-gate 76. At the same time, the opposite inlet of the latter receives from the RS-flip-flop 64 through its Q-terminal, and the AND-gate 76 delivers the output through the OR-gates 77 and 79, respectively, to the RS-flip-flops 64 and 56 for resetting both these so that the respective Q-terminals thereof becoming L-level. By this action, a counter circuit 57 is cleared and will terminate its counting job.

Should the rod 18 for any reason, accidental or otherwise, be stuck in its locking position in engagement with the locking recess 11 of the steering shaft 10 and thus be unable to move towards its unlocking position, the alarm circuit 55 will be actuated to issue an alarm signal in the following way.

When the RS-flip-flop 64 is set in the aforementioned way, its Q-terminal output is fed to the OR-gate 65, the AND-gate 76 and the RS-flip-flop 56. Thus, the RS-flip-flop 56 is set and an H-level signal is fed to the counter circuit 57 at its clear terminal. The latter circuit is thus reset and starts again to count the input clock pulses. When a pre-determined counting period elapses *without* initiation of movement of the bar 18 from its locking to unlocking position, the alarm circuit 55 begins to deliver alarm signals under the action of the input signal from the counter circuit 57.

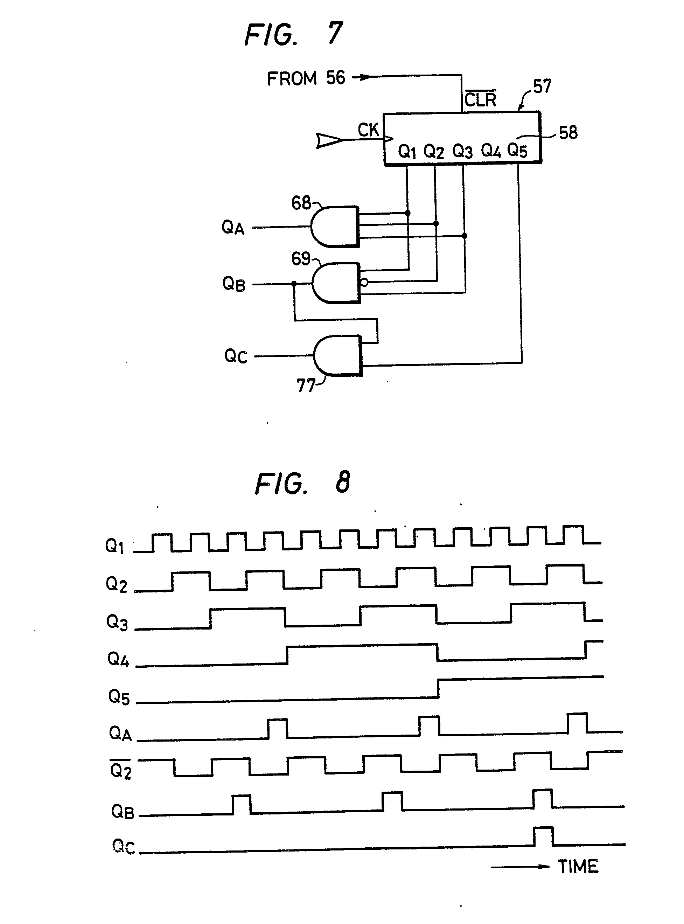

As shown in more detail in Fig. 7, the counter circuit 57 comprises a counter 58 adapted for reception of the Q-terminal output of the RS-flip-flop 56 as well as the clock signal, and AND-gates 68 and 69 connected respectively to output terminals $Q_1$-$Q_3$ of the said counter 58. Those signals shown specifically in the timing chart of Fig. 8 are delivered from the output terminals $Q_1$ to $Q_5$. Also the AND-gates 68 and 69 deliver output signals $Q_A$ and $Q_B$, respectively, upon reception of respective output signals delivered from the output terminals $Q_1$ to $Q_3$. The AND-gate 69 differs from those previously mentioned in that it receives the $Q_2$-output signal at its reversing output terminal. A further AND-gate 77 receives $Q_B$- and $Q_5$-signals for delivery of a $Q_C$-signal.

In order to permit the output terminals $Q_1$ to $Q_5$ deliver the required respective output signals by the commonly known flip-flop operation, the AND-gate 68 delivers $Q_A$-signal after about seven seconds counted from the initiation of a counting operation by the counter 58 and again generates $Q_A$-output signal about eight seconds thereafter. The AND-gate 69 delivers $Q_B$-output signal after about five seconds counted from the start of the said counting operation, and again generates $Q_B$-output signal about eight seconds thereafter.

$Q_C$-output signal is delivered after about twenty one seconds counted from the initiation of the counting operation simultaneously with the generation of the $Q_B$-output signal.

It will be clear from the foregoing that if the shaft-locking bar 18 cannot move towards its unlocking position even when the RS-flip-flop 64 has been brought into its set-position, no reset signal will be delivered, from the RS-flip-flop 74 and thus the RS-flip-flop 56 will continue in its set-position and the counter 57 will count the clock pulses as before. Thus, upon lapse of the predetermined time period, the $Q_B$-output signal will be generated.

$Q_B$-output signal generation will occur after the said time period where the motor 22 has executed its regular unlocking rotation for urging the locking bar 18 towards its unlocking position. A buzzer 81 of the alarm circuit 55 will operate for a predetermined time period by actuation of an exclusive OR-gate 80, and at the same time, a reset signal will be fed to the RS-flip-flop 64 through the OR-gate 77. Thus, the buzzer 81 will alert the vehicle driver to the fact that the locking bar 18 is accidentally stuck in its position locking the steering shaft and that it is necessary to manually and forcibly turn the steering shaft so as to release the bar 18. Also, by the resetting of the RS-flip-flop 64, the amplifier 66 is switched off so that current supply to the motor 22 is terminated.

Upon lapse of a further predetermined time period, the $Q_A$-output signal is delivered from the counter 57, the RS-flip-flop 64 is set through the OR-gate 63 and a Q-terminal output signal is generated.

Thus, current will be delivered through the OR-gate 65, the amplifier 66 and the relay 67 to the motor 22 which is, therefore, energized. If the driver turns the steering wheel manually at this time the locking bar 18 will be freed from its stuck condition. With the general circuit shown in Fig. 6, the foregoigng operation will be repeated twice.

If the locking bar 18 should not be freed from its stuck condition even when the foregoing twice repeated bar-freeing operation has been executed, the $Q_B$- and the $Q_C$-output signals are generated. Upon generation of the former signal $Q_B$, the RS-flip-flop 64 is caused to set. Upon generation of the $Q_C$-output signal which is fed through the OR-gates 79 and 82, respectively, the RS-flip-flops 56 and 60 are reset.

The number of times the alarm circuit 55 has to be operated and the length of time such alarm operation continues, depends, naturally, upon the length of the timing pulse and the circuit constants of each of the related gate circuits. Therefore, by modifying the circuit parameters, the number of reception times and the length of each operation period can be modified as occasion requires.

At the final stage where both the $Q_B$- and $Q_C$-outputs are generated simultaneously, the exclusive OR-gate 80 does not deliver any output signals so the buzzer 81 is unable to operate.

When the RS-flip-flop 56 is brought to its reset position, the counter circuit 55 is cleared and the counting operation thereof is thus terminated.

When both the RS-flip-flop 60 and 64 are reset, their respective Q-terminal outputs are of L-level. Thus, the amplifier 66 is switched off and the relay 67 changes its operational position from "a" to "b" contact. Therefore, both end terminals of the motor 22 are short-circuited through the related relay and the motor 22 is brought to a dead halt by the action of an attached braking unit (not shown).

When a shaft-unlocking action is executed by regular rotation of the motor 22, the output signal of the AND-gate 76 is fed through the OR-gate 78 to the setting terminal of an RS-flip-flop 85, whereby the latter issues its output signal from its attributed output terminal Q to an AND-gate 86, a three-state buffer 87 and an amplifier 88 which delivers its output so as to close the ignition circuit 90. The three-state buffer 87 delivers its output signal when the AND-gate 86 delivers no output, the said output signal being fed through an OR-gate 91 and an amplifier 92 to an accessary circuit 93 which is thus closed. It should be noted that the term "accessary" is abbreciated to "ACC".

The input terminals of the AND-gate 86 are in communication with the RS-flip-flop 85, and engine sensor 941 and the keyboard button switch array 45. The design of the general circuit shown in Fig. 6 is so selected that with the vehicle engine running at a higher rotational speed than that which has been predetermined, the engine sensor 941 is kept at L-level, whilst with the engine nearly (or correctly) in its stationary condition, the sensor 941 is maintained at H-level.

During the stationary condition of the engine and with the RS-flip-flop 85 brought into setting, when any selected one of the buttons at keyboard 45 is depressed, output continues to be delivered to the AND-gate 86 which will be thus activated. The output of the latter is forwarded through amplifiers 94 and 95, whereby a starter circuit 96 and a resistor short circuit 97 are energized so as to actuate the starter motor for starting up the engine.

At this time, and under the influence of output from the AND-gate 86, the ACC-circuit 93 is switched off by the inverting action of the three-state buffer 87.

However, once the vehicle engine (not shown) has been started by the operation of the AND-gate 86, the starter motor (not shown) cannot be started even by depressing the conventional starting button switch (not shown) because of the existence of L-level output at the engine sensor 941.

If accidental application of outside noises or shocks should occur during practical running of the vehicle and cause the RS-flip-flop 85 acting to keep the ignition circuit 90 closed to reset, the last-mentioned circuit will be opened and the engine will stop against the will of the vehicle driver. Such circumstances could lead to a serious accident.

Provision is therefore made for the AND-gate 70, which will be acutated by simultaneous application of the output of the RS-flip-flop 60 and of the output from a running sensor 98 adapted for delivery of L-level signal during the vehicle-running or of H-level signal during the vehicle stoppage, to be set by a shaft-unlocking signal. As will be seen from Fig. 6, the gate 70 will deliver its output signal when it simultaneously receives H-level output signal from the RS-flip-flop 74.

After execution of the shaft-unlocking operation and during the vehicle-running, the running sensor 98 originally delivers L-level output signal which is converted to H-level signal by the inverting action of the AND-gate 70, the latter, therefore, continuing its output signal to the set terminal of the RS-flip-flop 85 which can thus deliver its stable output signal.

As an alternative mode for closure of the ACC-circuit 93, switches on the keyboard 45 are depressed in a certain predetermined order for delivery of coded signals to the comparator 51. When the coded input digits coincide with these already stored in the memory 50, the output of the coincidence signal output circuit 52 is fed to the set terminal of an RS-flip-flop 99 which is then brought into its set position for delivery of an output signal from its Q-terminal. This output is then fed through the OR-gate 91 and the amplifier 92 to close the ACC-circuit 93. In this way, the driver may, for example, enjoy a radio programme without having to input an unlock instruction signal.

The shaft-locking circuit 46 comprises an AND-gate 100, a one-shot circuit 101, an AND-gate 102, an RS-flip-flop 103 and an AND-gate 104.

The AND-gate 100 receives an output from the button switches on the keyboard 45. The one-shot circuit 101 is triggered by the output from the AND-gate 100. The AND-gate 102 receives respective outputs from the one shot circuit 101, the RS-flip-flop 74 and the running sensor 98. The output of the AND-gate 102 is fed to the set terminal of the RS-flip-flop 103 and its output signal at the Q-terminal is fed to the AND-gate 104 which will deliver its output signal to the OR-gate 65 upon reception of inputs from the RS-flip-flop 103 and the engine sensor 941.

The shaft-locking circuit 46 can act when the vehicle has stopped and the steering lock has been unlocked. More specifically, when two specifically selected push buttons on the keyboard 45 are depressed, the AND-gate 100 will deliver its output whereby the one shot circuit 101 delivers its output to the AND-gate 102. When the vehicle is stationary at this time, the AND-gate 102 will be on, its output being fed through the OR-gate 82 to the RS-flip-flop 60 which is thus reset so that its output at the Q-terminal is at L-level and AND-gate 70 is switched off. At the same time, the RS-flip-flop 85 is caused to reset due to the output signal of the AND-gate 102, the Q-terminal output of the RS-flip-flop 85 becoming L-level so as to switch the amplifier 88 and the AND-gate 86 off. Therefore both amplifiers 94 and 95 become non-conductive. Furthermore, the amplifier 92 is switched off through the three-state buffer 87 and the OR-gate 91.

At the same time, the output signal from the AND-gate 102 is fed to the set terminal of the RS-flip-flop 103 which is thus caused to set, the Q-terminal output thereof being fed to the AND-gate 104.

If, at this time, the engine is stationary, the engine sensor 941 will deliver H-level output, so as to cause an output from the AND-gate 104 through the OR-gate 65 to the amplifier 66, the latter thus being switched on and the relay arm 67 being transferred to "a"-contact for energizing the motor 22.

Upon revolution of this motor 22, motion is transmitted from the attached gearing unit 23 and its output shaft 36 is turned clockwise 180 degrees from the position shown in Fig. 4 towards the shaft-locking position. At the 180 degree-revolutional position, the magnet 25 will act upon the reed switch 35 so as to bring the latter into its on condition. At the shaft-locking position, as shown in Fig. 6, the reed switch 34 is in off condition, while the other switch 35 is in its on condition. This results in the AND-gate 75 delivering an output so as to reset the RS-flip-flop 74 whereby its Q-terminal output becomes nil. At the same time, the RS-flip-flop 103 is caused to reset by the OR-gate 71. Its Q-terminal output thus ceases to deliver so as to stop revolution of the motor 22.

When the ACC-circuit 93 has been exclusively switched on, if it is desired to extinguish the circuit, either one of two specific button switches on the keyboard 45 can be depressed to deenergize the ignition circuit 90. When one of these buttons is depressed its output is delivered via OR-gates 105 and 106 to the RS-flip-flop 99 which is therefore reset, thus terminating its R-terminal output via the OR-gate 91 for making the amplifier 92 non-conductive. The reset terminal of the RS-flip-flop 99 now receives Q-output signal from the RS-flip-flop 60 via the OR-gate 106. The issuance of an alarm signal from the buzzer 81 serves to positively notify the vehicle driver that the locking bar 18 is stuck in the reception recess 11 on steering shaft 10.

After disengagement of the locking bar 18 from its co-operating reception recess 11, the RS-flip-flop 103 is set in the manner explained above, its output signal being transmitted through the three-state buffer 87 and the OR-gate 91 to the amplifier 92 which thus becomes conductive. It should, however, be noted that when the starter circuit 96 has been actuated, the circuit 87 will switch off.

Turning now to the operation of the whole illustrated arrangement, the vehicle driver depresses predetermined switches arranged on the keyboard 45 which is fixedly mounted on the vehicle door or a dashboard in the vehicle interior. The resulting digit signal is compared by the comparator 51 with those digits previously entered and stored in the memory 50. When there is coincidence between all the digits, an output signal indicating coincidence will be delivered from coincidence signal generator 52 to the RS-flip-flop 60 which in thus set. In the prevailing shaft-locking position of the bar 18, the RS-flip-flop 74 does not deliver any output signal from its Q-terminal. The RS-flip-flop 60 delivers its Q-terminal output which is transmitted via the one shot output circuit 61, the AND-gate 62 and the OR-gate 63 to the RS-flip-flop 64 which is then caused to set.

The Q-terminal output of the RS-flip-flop 64 is then delivered via the OR-gate 65 and the relay 67 to the motor 22 which is, therefore, activated. The torque of the motor 22 is transmitted through the gearing unit 23 and the output shaft 36 to the rotator 21 which acts to lift the locking bar 18 (together with the hanger 19) from its locking position to its unlocking position against the action of the coil spring 20. Generally speaking, the motor 22 may be of the unidirectional type. However, it may be replaced by a reversible motor.

At the shaft-locking position shown in Fig. 4, which has been brought about by a 180-degree revolution of the output shaft 36, the reed switch 35 is in its off condition, while the opposite reed switch 34 has been brought into its on condition. At this time, the AND-gate 73 delivers an output signal to the RS-flip-flop 74 which is thus set. The Q-terminal output of the latter is fed to the reversing input terminal of the AND-gate 62 which is thus switched off. Thus accidental actuation of the RS-flip-flop 64 by noise is positively prevented. An input signal is also fed to the respective reset terminals of the RS-flip-flop 64 and 56 which are thus reset.

In the case where the bar 18 is stuck in engagement with the locking recess 11 on the steering shaft 10 such that there is considerable difficulty in execution of the shaft unlocking operation, the alarm circuit 55 is caused to operate twice, as explained, by reception of the aforementioned input signal $Q_B$ causing resetting of the RS-flip-flop 64 twice so as to energize the motor 22. If the bar 18 is still stuck after all this, the output signal $Q_C$ is delivered, thus resetting both the RS-flip-flops 56 and 60. At the same time, the RS-flip-flop 64 is caused to reset by a third delivery of $Q_B$-output. Thereafter, the driver must depress again the selected buttons on the keyboard 45 in the predetermined manner.

When the steering shaft lock has been unlocked, output signals are delivered from the Q-terminals of the RS-flip-flop 64 and 74 to the AND-gate 76 which in turn delivers output to the OR-gate 78, so as to set the RS-flip-flop 85. Thus, the ignition circuit 90 is switched on, while the ACC-circuit 93 is also switched on by way of the three-state buffer 87 and the OR-gate 91.

When the driver depresses the selected switches on the keyboard 45, the AND-gate 86 is turned on, the starter circuit 96 and the resistor short circuit 97 become conductive, while the buffer 87 is temporarily turned off, thereby interrupting the ACC-circuit. When the engine is brought into operation, the engine sensor 941 is at L-level so the AND-gates 86 and 104 are turfed off. Therefore, the engine starter circuit 96 is turned off, while the buffer 87 is turned on again and the ACC-circuit 93 is energized. Thus, any false actuation of the motor 22 by accidental noises and shocks is suppressed.

Furthermore, while the vehicle is running, the output of the running sensor 98 is kept at L-level for maintaining the RS-flip-flop 60 in its setting condition. In this position, the AND-gate 70 continuously delivers a set signal through the OR-gate 78 to the RS-flip-flops 85 to prevent the ignition circuit 90 being cut off unintentionally during running (moving) of the vehicle.

After the vehicle has been intentionally stopped, when the driver intends to lock the steering shaft 10, he must depress the specifically selected two button switches on the keyboard 45 simultaneously. An instruction signal will then be fed successively through the AND-gate 100 and the one shot circuit 101 to the AND-gate 102 which delivers its output signal through the OR-gate 82 to the RS-flip-flop 60, thus terminating the Q-terminal delivery of the latter.

At the same time, the output from AND-gate 102 is fed to the reset terminal of the flip-flop 85, so as to terminate its Q-terminal output and thus turn both the ignition circuit 90 and the accessary circuit 93 off. As a result of this operation the engine ceases automatically.

Following therefrom, the engine sensor 941 delivers an output of H-level. The output from the AND-gate 102 is fed to the RS-flip-flop 103 at its set terminal. The Q-terminal output of the latter and the output from the engine sensor 941 are fed to the AND-gate 104, and an instruction signal is fed therefrom through the OR-gate 65 to the motor circuit 41 so as to energize the motor 22. Upon rotation of the motor 22, its output shaft 36 will be rotated 180 degrees clockwise with regard to the position shown in Fig. 4 from the shaft-unlock-position indicated in Fig. 5. Therefore, the reed switch 34 is turned off, while the reed switch 34 is turned on on account of access to, or close proximity of, the magnet 25.

Therefore, the AND-gate 75 delivers output so as to bring the RS-flip-flops 74 and 103 into setting. At the same time, the rotator 21 has been rotated to the shaft-locking position shown in Fig. 5 so the hanger 19 and the bar 18 move forward under the action of the coil spring 20, until the bar 18 is brought into intimate engagement with the reception recess 11 on the steering shaft 10.

**Claims**

1. A keyless steering lock arrangement comprising an operating bar (18) which is engageable with a steering shaft (10) and is movable between shaft-locking and shaft-unlocking positions by cam means (29) on a rotator (21), which, in turn, is driven by an electric motor (22), characterised in that the motor (22) is actuated by electronic circuit means (40 to 47) which includes means (54, 55) to generate an alarm signal (at 81) whenever the motor (22) has been actuated to unlock the shaft (10) but the bar (18) has remained stuck in its shaft-locking position.

2. An arrangement as claimed in claim 1 wherein the alarm generation means includes a counter circuit (57) as well as sensors (34, 35) which determine the actual position of the operating bar (18), the counter circuit (57) being cleared upon confirmation of shaft-unlocking from the sensors (34, 35), but alternatively, in the absence of such confirmation, acting to initiate the alarm signal upon lapse of a predetermined time period.

3. An arrangement as claimed in claim 2 wherein the sensors (34, 35) are arranged in a casing (24) enclosing the motor output shaft (36) and serve to sense the position of the motor output shaft (36) in its shaft-locking and shaft-unlocking positions respectively.

4. An arrangement as claimed in any preceding claim wherein the electronic circuit means comprises an unlock signal generating circuit (40), a motor circuit (41), a bar stick prevention circuit (42), a lock and unlock sensor circuit (43), an engine starter circuit (44), a shaft-locking circuit (46), and an accessory control circuit (47).

5. An arrangement as claimed in any of claims 2 to 4 wherein the counter circuit (57) is so connected that upon initiation of an alarm signal (at 80, 81) the motor (22) is switched off, but is subsequently reactivated after a pre-determined interval, and, in the event that the bar (18) is still not freed and moved to its shaft-locking position, after at least one further predetermined interval.

6. An arrangement as claimed in claim 5 wherein the counter circuit (57) is so connected that, in the event that the bar (18) has not moved to its shaft unlocking position even after the motor (22) has been re-activated a pre-determined number of times, the alarm circuit is switched off, and the motor circuit is switched off in such a way that the motor (22) can only be re-activated, to unlock the shaft (10) by a fresh operator input.

7. An arrangement as claimed in claim 5 or 6 wherein the electronic circuit means is such that so long as the bar (18) is stuck in the shaft locking position, the alarm signal is initiated afresh after each occasion that the motor (22) is re-activated, and, in each case, the alarm continues only for a pre-determined time period.

8. An arrangement as claimed in any of claims 2 to 7 wherein the electronic circuit means is such that upon confirmation of shaft unlocking, i.e. upon sensing that the bar (18) has moved into its shaft-unlocking position, the circuit path leading to actuation of the motor (22) is disabled, until a further operator input is received to bring about shaft locking.

9. An arrangement as claimed in any of claims 2 to 8 wherein the electronic circuit is such that upon confirmation of shaft-unlocking, i.e. upon sensing that the bar (18) has moved to its unlocking position, an ignition circuit (90) is automatically switched on.

10. An arrangement as claimed in any preceding claim wherein the cam means (29) is in the form of a sector cam having a slightly rounded apex (30) for effecting shaft-locking of the bar (18) and an arc-shaped cam surface (33) for effecting shaft-unlocking of the bar (18).

**Patentansprüche**

1. Lenkschloßanordnung ohne Schlüssel mit einer Bedienungsstange (18), die mit einer Lenkspindel (10) in Eingriff gebracht werden kann und zwischen Spindelverriegelungs- und Spindelentriegelungspositionen durch Nocken (29) auf einem Rotor (21) bewegbar ist, der seinerseits durch einen Elektromotor (22) angetrieben wird, dadurch gekennzeichnet, daß der Motor (22) durch elektronische Stromkreise (40 bis 47) betätigt wird, die Mittel (54, 55) einschließen, um ein Alarmsignal (bei 81) auszulösen, wenn der Motor (22) betätigt worden ist, um die Spindel (10) zu entriegeln, die Stange (18) jedoch in ihrer Spindelverriegelungsposition steckengeblieben ist.

2. Anordnung nach Anspruch 1, worin das Alarmerzeugungsmittel einen Zählkreis (57) sowie Sensoren (34, 35) einschließt, die die tatsächliche Position der Bedienungsstange (18) erfassen, wobei der Zählkreis (57) nach Bestätigung der Spindelentriegelung von den Sensoren (34, 35) unterbrochen wird, jedoch alternativ bei Fehlen einer solchen Bestätigung nach Ablauf einer vorbestimmten Zeitdauer das Alarmsignal auslöst.

3. Anordnung nach Anspruch 2, worin die Sensoren (34, 35) in einem Gehäuse (24) angeordnet sind, das die Motorabtriebswelle (36) einschließt, und dazu dienen, die Position der Motorabtriebswelle (36) in ihrer Spindelverriegelungs- bzw. Spindelentriegelungsposition zu erfassen.

4. Anordnung nach einem der vorstehenden Ansprüche, worin die elektronischen Schaltkreise einen ein Entriegelungssignal erzeugenden Stromkreis (40), einen Motorstromkreis (41), einen Stangenklemmverhinderungsstromkreis (42), einen Verriegelungs- und Entriegelungssensorstromkreis (43), einen Anlasserstromkreis (44), einen Spindelverriegelungsstromkreis (46) und einen Hilfssteuerstromkreis (47) umfassen.

5. Anordnung nach einem der Ansprüche 2 bis 4, worin der Zählkreis (57) so geschlatet ist, daß nach Auslösung eines Alarmsignals (bei 80, 81) der Motor (22) abgeschaltet wird, jedoch nach einem vorbestimmten Intervall und, falls die Stange (18) noch nicht freigegeben und in ihre Spindelverriegelungsposition bewegt worden ist, nach zumindest einem weiteren vorbestimmten Intervall wieder eingeschaltet wird.

6. Anordnung nach Anspruch 5, worin der Zählkreis (57) so geschaltet ist, daß im Falle, das die Stange (18) sich selbst dann nicht in ihre Spindelentriegelungsposition bewegt hat, wenn der Motor (22) für eine vorbestimmte Anzahl von Malen wieder eingeschaltet worden ist, der Alarmstromkreis abgeschaltet wird und der Motorstromkreis derart abgeschaltet wird, daß der Motor (22) nur durch eine neue Eingabe des Bedienenden wieder eingeschaltet werden kann, um die Spindel (10) zu entriegeln.

7. Anordnung nach Anspruch 5 oder 6, worin der elektronische Stromkreis so ist, daß, solange die Stange (18) in der Spindelverriegelungsposition festsitzt, das Alarmsignal erneut jedesmal, wenn der Motor (22) wieder eingeschaltet wird, ausgelöst wird und in jedem Falle der Alarm für eine vorbestimmte Zeitspanne andauert.

8. Anordnung nach einem der Ansprüche 2 bis 7, worin der elektronische Stromkreis so ist, daß nach Bestätigung der Spindelentriegelung, d.h. nach der Erfassung, daß die Stange (18) sich in ihre Spindelentiegelungsposition bewegt hat, der zur Betätigung des Motors (22) führende Schaltungsweg unbrauchbar gemacht wird, bis eine weitere Bedienereingabe erhalten wird, um die Spindelverriegelung zustande zu bringen.

9. Anordnung nach einem der Ansrpüche 2 bis 8, worin der elektronische Stromkreis so ist, daß nach Bestätigung der Spindelentriegelung, d.h. nach Erfassung, daß die Stange (18) sich in ihre Entriegelungsposition bewegt hat, ein Zündstromkreis (90) automatisch eingeschltet wird.

10. Anordnung nach einem der vorstehenden Ansprüche, worin der Nocken (29) die Form eines Sektornockens mit einem leicht gerundeten Scheitel (30) aufweist, um die Spindelverriegelung der Stange (18) durchzuführen, und eine bogenförmigen Nockenoberfläche (33), um die Spindelentriegelung der Stange (18) durchzuführen.

## Revendications

1. Dispositif de verrouillage de direction sans clé comprenant une barre d'actionnement (18) qui peut venir en prise avec un arbre de direcetion (10) et qui est mobile entre des positions de verrouillage et de déverrouillage d'arbre par un moyen à came (29) prevu sur un organe rotateur (21), qui est à son tour entraîné par un moteur électrique (22), caractérisé par le fait que le moteur (22) est actionné par un moyen à circuit électronique (40 à 47) qui comprend des moyens (54, 55) pour produire un signal d'alarme (en 81) à chaque fois que le moteur (22) a été actionné pour déverrouiller l'arbre (10) mais que le barre (18) est restée collée dans sa position de verrouillage d'arbre.

2. Dispositif tel que revendiqué dans la revendication 1, dans lequel le moyen de génération d'alarme compernd un circuit de comptage (57) ainsi que des capteurs (34, 35) qui déterminent la position réelle de la barre d'actionnement (18), le circuit de comptage (57) étant déconnecté lors d'une confirmation d'un déverrouillage d'arbre en provenance des capteurs (34, 35), mais, ou bien, en l'absence de cette confirmation, agissant pour enclencher le signal d'alarme après écoulement d'une période de temps prédéterminée.

3. Dispositif tel que revendiqué dans la revendication 2, dans lequel les capteurs (34, 35) sont disposés dans un boîtier (24) entourant l'arbre de sortie (36) du moteur et servant à détecter la position de l'arbre de sortie (36) du moteur respectivement dans ses positions de verrouillage d'arbre et de déverrouillage d'arbre.

4. Dispositif tel que revendiqué dans l'une quelconque des revendications précédentes, dans lequel le moeyn à circuit électronique compernd un circuit (40) de génération de signal de déverrouillage, un circuit de moteur (41), un circuit (42) d'empêchement de collage de barre, un circuit (43) de détection de verrouillage et de déverrouillage, un circuit (44) de démarrage de moteur, un circuit (46) de verrouillage d'arbre et un circuit (47) de commande d'accessoires.

5. Dispositif tel que revendiqué dans l'une quelconque des revendications 2 à 4, dans lequel le circuit de comptage (57) est connecté de telle sorte que, lors du déclenchement d'un signal d'alarme (en 80, 81), le moteur (22) est désactivé, mais est ensuite réactivé au bout d'un intervalle de temps prédéterminé et, dans le cas où la barre (18) n'est pas encore libérée et amenée dans sa position de verrouillage d'arbre, au bout d'au moins un autre intervalle prédéterminé.

6. Dispositif tel que revendiqué dans la revendication 5, dans lequel le circuit de comptage (57) est connecté de telle sorte que, au cas où la barre (18) n'a pas été amenée dans sa position de déverrouillage d'arbre même après que le moteur (22) a été réactivé un nombre prédéterminé de fois, le circuit d'alarme est désactivé et le circuit de moteur est désactivé de manière que le moteur (22) puisse seulement être réactivé pour déverrouiller l'arbre (10) par une nouvelle entrée faite par l'opérateur.

7. Dispositif tel que revendiqué dans la revendication 5 ou 6, dans lequel le moyen à circuit électronique est agencé de telle sorte que, tant que la barre (18) est collée dans la position de verrouillage d'arbre, le signal d'alarme est à nouveau amorcé après chaque opération de réactivation du moteur (22) et, chaque fois l'alarme est maintenue seulement pendant une période de temps prédéterminée.

8. Dispositif tel que revendiqué dans l'une quelconque des revendications 2 à 7, dans lequel le moyen à circuit électronique agencé de telle sorte que, lors d'une confirmation d'un déverrouillage d'arbre, c'est-à-dire lors d'une détection que la barre (18) a été amenée dans sa position de déverrouillage d'arbre, la voie de circuit permettant un actionnement du moteur (22) est interdite jusqu'à ce qu'une autre entrée produite par le conducteur soit reçue pour engendrer un verrouillage de l'arbre.

9. Dispositif tel que revendiqué dans l'une quelconque des revendications 2 à 8, dans lequel le circuit électronique est agencé de telle sorte que, lors d'une confirmation d'un déverrouillage de l'arbre, c'est-à-dire lors d'une détection que la barre (18) a été amenée dans sa position de déverrouillage, un circuit d'allumage (90) est automatiquement enclenché.

10. Dispositif tel que revendiqué dans l'une quelconque des revendications précédentes, dans lequel le moyen à came (29) est une came en forme de secteur comportant un sommet (30) légérement arrondi pour faire en sorte que la barre (18) produise un verrouillage de l'arbre et une surface de came en forme d'arc (33) pour faire en sorte que la barre (18) déverrouille l'arbre.

FIG.  1

FIG.  2

*FIG. 3*

*FIG. 4*

*FIG. 5*

FIG. 6(A)

# FIG. 6(B)

## FIG. 7

## FIG. 8